# EUROPEAN PATENT SPECIFICATION

(11) **EP 3 956 594 B1**
(45) Date of publication and mention of the grant of the patent: **08.03.2023**
(21) Application number: 19749284.6
(22) Date of filing: 25.07.2019
(51) Int. Cl.: F16L 33/22

(54) **HOSE CONNECTOR WITH DIAGONALLY ARRANGED CLAMPING ELEMENTS**
SCHLAUCHANSCHLUSS MIT DIAGONAL ANGEORDNETEN KLEMMELEMENTEN
RACCORD DE TUYAU À ÉLÉMENTS DE SERRAGE DISPOSÉS EN DIAGONALE

(30) Priority: 18.04.2019 DE 102019002833
(43) Date of publication of application: 23.02.2022
(73) Proprietor: Husqvarna AB, 56182 Huskvarna (SE)
(72) Inventor: RENNER, Thomas, 89079 Ulm (DE)
(74) Representative: Finkele, Rolf
(86) International application number: PCT/EP2019/070134
(87) International publication number: WO 2020/211965

(56) References cited:
- FR-A1- 2 021 339
- GB-A- 1 167 680
- US-A- 4 257 629

## Description

### TECHNICAL FIELD

The present disclosure relates to a hose connector, and more particularly to self-reinforcing means which provide proper retaining of a hose by the hose connector.

### BACKGROUND

People are increasingly moving towards outdoors avenues such as gardening to hedge against increasing technological intrusion in everyday life. Such trends have led to various improvements in gardening equipments to the very basic level of a common hose and associated equipments. During implementation, the hose is connected to a source of water supply such as a tap or a pump so that water can be delivered through the hose. A hose connector allows quick coupling of the hose with the source of water supply. The hose connector typically includes a body, a clamping nut, and a clamping element. For coupling the hose with the hose connector, the hose is pushed so that the hose is received by the body of the hose connector. In some situations, the hose is not received up to an appropriate length, or with proper reinforcement within the hose connector. This may be generally because of friction between the body and the hose, or wearing of the hose with time which may require regular dismantling and then proper fixing of the hose with the body.

If the hose is not properly received by the body, there are chances that the hose may slip out of connection during operation. For example, if the hose experiences an alternating load, there is a high probability that the hose may slip out of connection. Thus, it is important for a common user to properly attach the hose to the body with minimum effort and expertise. Conventional hose connectors come short of providing a user-friendly and simple solution to ensure a tight and self-reinforcing connection between the hose and the body of the hose connector.

The French patent application FR 2 021 339 A1 describes a hose connector with an associated flexible clamping element exhibiting clamping claws that are forced onto an inserted hose by a hose nut screwed onto the body of the connector. By this the clamping claws transfer holding forces onto the hose. Thereby the plurality of clamping claws are arranged in a linear or helical arrangement to each other. While the description and figures focus on the linear arrangement of the clamping claws it is also mentioned in a single clause that the same could also be arranged helically .

Thus, there is a need for an improved hose connector which inherently allows better coupling of the hose with the body of the hose connector.

### SUMMARY

In view of the above, it is an objective of the present invention to solve or at least reduce the drawbacks discussed above. The objective is at least partially achieved by a hose connector. The hose connector includes a body including a first body portion extending along a longitudinal axis, and a second body portion disposed concentrically around the first body portion. The first body portion and the second body portion define a gap between them such that the gap is adapted to receive a hose there. The hose connector further includes a clamping nut threadably coupled to the second body portion. Moreover, the hose connector includes a plurality of clamping claws associated with the second body portion. The plurality of clamping claws is oriented at an angle (α) greater that 0 degree relative to the longitudinal axis. The plurality of clamping claws are designed such that they remain straight along the longitudinal axis up to a point before the clamping claws take a helical arrangement in accordance with the angle (α). Thus, the present disclosure provides simple, effective, and user-friendly clamping claws which ensure self-reinforcing of the hose with the hose connector.

According to an embodiment of the present invention, the angle (α) lies in a range of 10 degrees to 60 degrees. The choice of the angle (α) may be dependent upon a multitude of factors related to the hose (say diameter, material, type, thickness and the like) and/or the hose connector (say service life, liquid capacity, material, dimensions and the like).

The positioning of the clamping claws in the helical manner provide the desired self-reinforcing force to keep the hose in place, till desired.

According to an embodiment of the present invention, the plurality of clamping claws is formed integrally with the second body portion. This may be in keeping with convenience and wherewithal benefits while manufacturing of the clamping claws of the hose connector or to from strength and like considerations.

According to an embodiment of the present invention, the plurality of clamping claws is adapted to move radially relative to the first body portion. This will provide self-reinforcing force to cater to any dynamic movement of the hose to ensure that the hose remains coupled between the first body portion and the second body portion.

According to an embodiment of the present invention, the plurality of clamping claws is adapted to move axially relative to the first body portion. Such a feature will cater to any undesirable loosening of the hose in longitudinal axis to the first body portion.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a conventional hose connector;
**FIG. 2** shows a perspective view of a hose connector along with a clamping nut, in accordance with an embodiment of the present invention;
**FIG. 3** shows a partial sectional side view of a body of the hose connector, in accordance with an embodiment of the present invention;
**FIG. 4** shows a partial sectional side view of the hose connector and a hose received by the hose connector, wherein the clamping nut is again in an engaged state, in accordance with an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention, which is defined in the appended claims, can be utilized in other embodiments. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

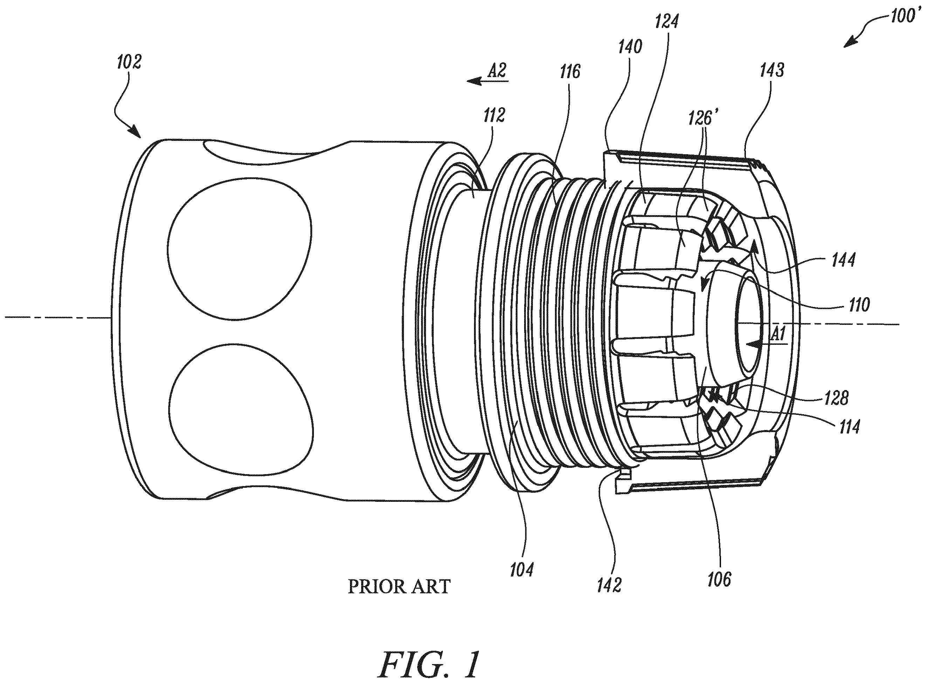

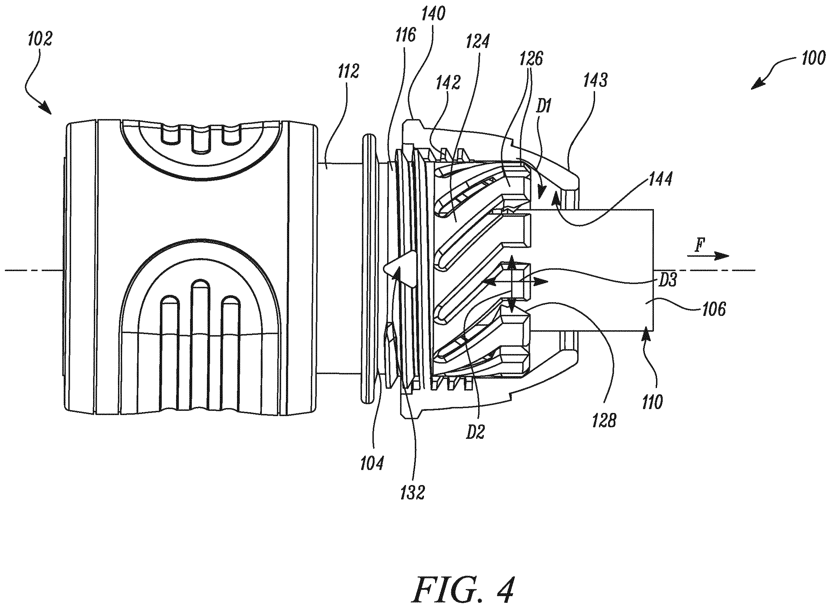

**FIG. 1** illustrates a conventional hose connector **100'** known from the state of the art. The conventional hose connector **100'** may find applications in indoor as well as outdoor environments, which may make use of a water supply source (not shown) for performing a watering operation. For example, the water supply source may include a tap or a pump outlet. The conventional hose connector **100'** includes a body **102.** The body **102** defines an end **104** that may be detachably coupled with the water supply source. The body **102** includes a first body portion **106.** The first body portion **106** allows coupling of a hose **108** (shown in **FIG. 4**) which may be used to perform desired watering operations as per the requirement. However, during implementation the hose **108** may tend to uncouple or loosen from the conventional hose connector **100'** which is undesirable and will be addressed by the present disclosure.

The end **104** may be generally tubular in shape. In one example, the end **104** may include internal threads (not shown) that engage with external threads on the water supply source for detachably coupling the conventional hose connector **100'** with the source of water supply. In an alternate example, the conventional hose connector **100'** may be press fitted to the water supply source, without any limitations.

The conventional hose connector **100'** includes a clamping element **124.** The clamping element **124** includes a number of straight clamping claws **126'.** As will be evident, the straight clamping claws **126'** of the conventional hose connector **100'** are substantially aligned along a longitudinal axis (along **A1**). This may pose certain limitations while clamping the hose **108** (shown in **FIG. 4**) with a desired clamping force and for a desired time, without having to disassemble and assemble the conventional hose connector **100'.** Further, the straight clamping claws **126'** include one or more teeth **128** that are defined on an inner surface of the respective straight clamping claws **126'.** In the illustrated embodiment, each clamping claw **126'** includes two teeth **128.** Alternatively, each clamping claw **126'** may include more than two teeth **128,** without any limitations.

The first body portion **106** defines a fluid passage (not shown) that allows water from the water supply source to be introduced in the hose **108** (shown in **FIG. 4**) that connects with the conventional hose connector **100'.** The hose **108** is received by the first body portion **106** such that the hose **108** contacts an outer surface **110** of the first body portion **106.** Further, the body **102** includes a second body portion **112.** The second body portion **112** is disposed concentrically around the first body portion **106.** More particularly, the first and second body portions **106, 112** are provided such that a gap **114** is defined between the first and second body portions **106, 112.** The hose **108** is received within the gap **114** defined between the first and second body portions **106, 112.**

The second body portion **112** has an annular shape. The second body portion **112** defines a number of external threads **116.** Additionally, the second body portion **112** defines a sliding surface (not shown) disposed at one side of the number of external threads **116.** Further, the conventional hose connector **100'** includes a clamping nut **140** threadably coupled to the second body portion **112.** Based on a rotation of the clamping nut **140** in a threading direction **"A2"**, the clamping nut **140** may be engaged or disengaged from the second body portion **112.**

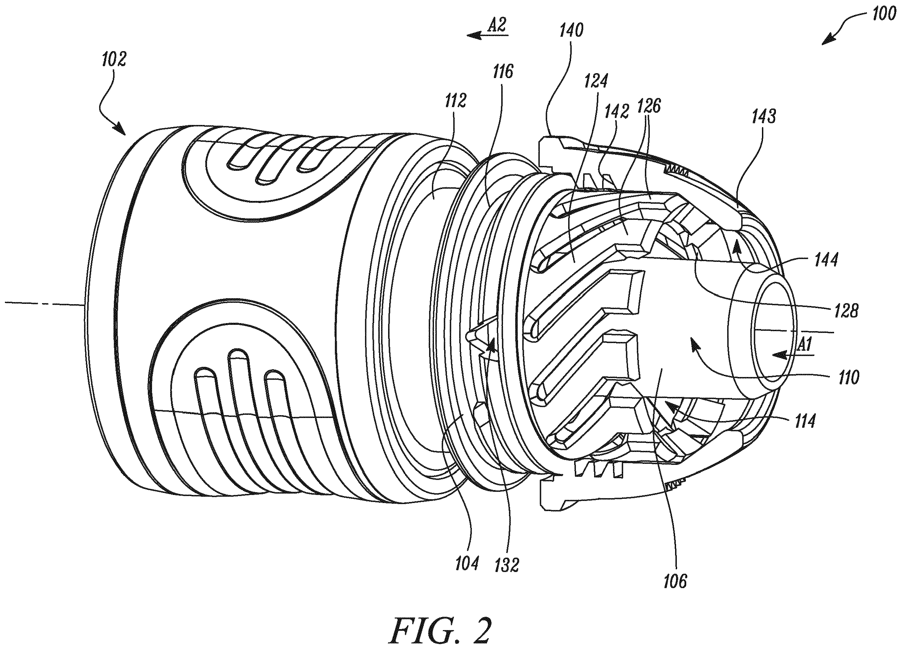

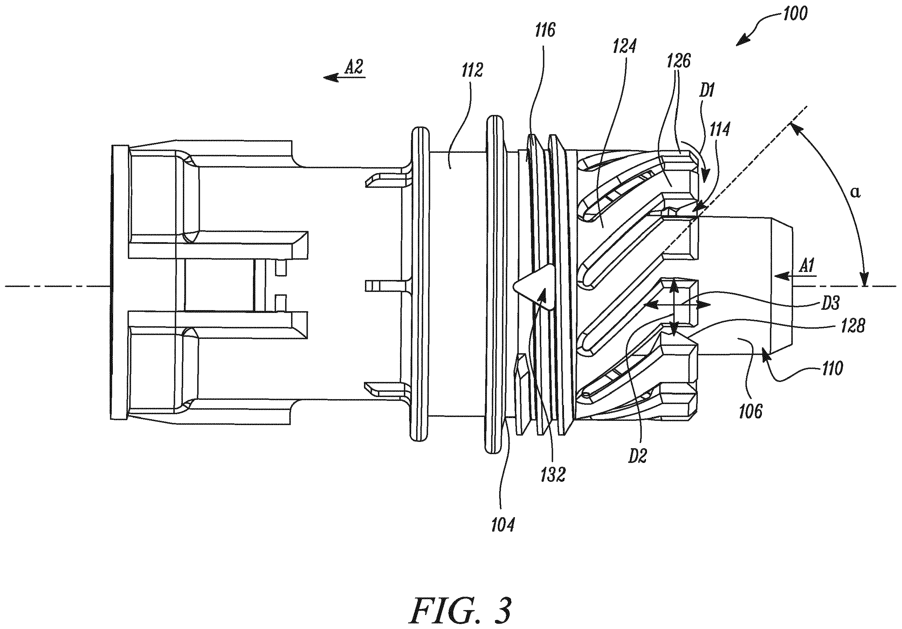

**FIG. 2** illustrates a hose connector **100** in accordance with embodiments of the present disclosure. The hose connector **100** includes a plurality of clamping claws **126** oriented at an angle **(α)** relative to a longitudinal axis (along **A1**). The present disclosure allows converting a conventional hose connector **100'** with replacement of straight clamping claws **126'** attached to the clamping element **124** with the clamping claws **126** oriented at an angle **(α)** to obtain the hose connector **100** of the present disclosure. From ease of implementation and service, different clamping elements **124** with different clamping claws **126** oriented at desired angle **(α)** may be made available to suit the requirement. In a preferred embodiment, the angle **(α)** may lie in a range of 10 degrees to 60 degrees (refer **FIG. 3** for instance), however the angle **(α)** can have any other value in consideration of desired self-reinforcing force to keep the hose **108** between the first and second body portions **106, 112** by the clamping claw **126.** The choice of the angle **(α)** may be dependent upon a multitude of factors related to the hose **108** (say diameter, material, type, thickness and the like) and/or the hose connector **100** (say service life, liquid capacity, material, dimensions and the like).

Further, the second body portion **112** includes an opening **132,** multiple number of opening **132** have been contemplated and possible in implementation of the present disclosure. The opening **132** may serve as a visual guide so as to check proper positioning of the hose **108** between the first and second body portions **106, 112.**

In some embodiments, the clamping claws **126** are formed integrally with the second body portion **112,** or even with the clamping element **124** as explained earlier. This may be in keeping with convenience and wherewithal benefits while manufacturing of the clamping claws **126** of the hose connector **100,** or from strength and like considerations.

The clamping element **124** is coupled to the second body portion **112.** In one example, the clamping element **124** is coupled to the second body portion **112** through a snap fit arrangement. The clamping element **124** is coupled to the second body portion **112** such that the clamping element **124** is slidable along the longitudinal axis **"A1"** with respect to the second body portion **112.** More particularly, the clamping element **124** is slidably received on the sliding surface thereby allowing an axial movement of the clamping element **124.** Additionally, the clamping element **124** and the second body portion **112** are designed such that the clamping element **124** tilts radially with respect to the second body portion **112.**

In one example, the clamping element **124** is molded on the body **102.** For example, an injection molding process may be used for molding the clamping element **124** on the hose connector **100.** Alternatively, any injection molding process or an assembly injection molding process may be used for molding the clamping element **124** on the hose connector **100.** In other examples, the clamping element **124** and the hose connector **100** may be manufactured as separate components that are later coupled with each other. As the clamping element **124** is manufactured using cost efficient techniques, the hose connector **100** does not incur significant component production costs. Additionally, installation costs and time associated with the assembly and disassembly of the clamping element **124** with the body **102** is reduced as the clamping element **124** is molded with the body **102.** Further, a material of the body **102** may be different from a material of the clamping element **124.** In an example, the clamping element **124** may be made of polyoxymethylene whereas the body **102** may be made of polypropylene, without any limitations.

Referring to **FIG. 3****,** the hose connector **100** is shown without the clamping nut **140** to have a better view and clarity regarding role and position of the clamping claws **126.** As illustrated, the clamping claws **126** are arranged in a helical manner relative to the longitudinal axis. Moreover, the clamping claws **126** may be made of a material such that they are able to undergo twisting (shown with an arrow adjacent the clamping claws **126)** or any such desired movement to claw (or couple) around the hose **108** inserted over the first body portion **106** for coupling. This positioning of the clamping claws **126** in the helical manner provide the desired self-reinforcing force to keep the hose **108** in place, as desired for the application. In an embodiment, the choice of material for the clamping claw **126** may be for plastics, polymers (say polyoxymethylene) or the like, as will be evident for a person having knowledge in the art.

In some embodiments, the clamping claws **126** are adapted to move radially (**D1** as best shown with an arrow near the clamping claws **126** here) relative to the first body portion **106.** This will provide self-reinforcing force to cater to any dynamic movement of the hose **108** to ensure that the hose **108** remains coupled between the first body portion **106** and the second body portion **112.** Additionally, or alternatively, the plurality of clamping claws **126** are adapted to move axially **(D3** as shown with a doubled-headed arrow with the clamping claws **126**) relative to the first body portion **106.** Such a feature will cater to any undesirable loosening of the hose **108** in longitudinal axis to the first body portion **106.** Moreover, this allows adjustment or limited movement of the clamping claws **126** about 3-degrees (radially, perpendicularly, or axially, **D1**, **D2**, or **D3**, respectively, as shown with arrows in the latest figure) so as to check any undesired movement of the hose **108**, from between the clamping claws **126** and the first body portion **106.**

**FIG. 4** illustrates the hose connector **100** again installed with the clamping nut **140.** The clamping nut **140** is said to be in the engaged position when internal threads **142** of the clamping nut **140** engage with the external threads **116** on the second body portion **112.** The clamping nut **140** defines a clamping surface **144.** In the engaged position of the clamping nut **140**, the clamping surface **144** of the clamping nut **140** is spaced apart from the clamping claws **126** of the clamping element **124**.

The clamping claws **126** are designed such that the clamping claws **126** remain straight along the longitudinal axis **A1** up to a point before the clamping claws **126** take the helical arrangement in accordance with the desired angle **(α)**. The clamping claws **126** may take the helical arrangement or any arrangement such as, but not limited to, "L", "T" or any other shape as will be evident to a person having knowledge in the art. This may make the clamping claws **126** more applicable for applications which may require more demanding conditions dependent upon dimensions/size/weight/type of the hose **108** or any other implementation requirement of the hose connector **100.**

Further, the clamping nut **140** includes a tail portion **143**, such that the tail portion **143** applies force on the clamping element **124** when the clamping nut **140** is in the engaged position. As shown in **FIG. 4**, the clamping nut **140** does not apply force on the clamping element **124** such that the clamping element **124** is in a retracted position when the clamping nut **140** is in the disengaged position.

During implementation of the clamping nut **140** of the present disclosure, the clamping claws **126** of the clamping element **124** may also allow self-tightening of the hose **108**, based on and using any dynamic movement or pull on the hose **108.** Put simply, the hose **108** may, at some instance, experience a pull or outward force (as shown by **F**) in the latest figure. However, based on the ability of the clamping claws **126** to adjust or move radially (**D1**)/axially **(D3)**/perpendicularly (**D2**) (or movement in any other plane or direction or angle) over the hose **108** coupled with the first body portion **106**, the clamping claws **126** may work for self-tightening of the hose **108** in commensurate to the force **F** experienced by the hose **108**. This will ensure that the hose **108** does not experience any undesired or unintended withdrawal or loosening out of the clutch of the clamping claws **126** due to their arrangement in a helical manner (by the angle **(α)**) as well as the adjusting ability of the clamping claws **126** along 3-degress (**D1**, **D2**, and **D3**). Thus, the hose connector **100** of the present disclosure provides self-reinforcing of the hose **108** leading to a simplified assembly and disassembly. More particularly, the components of the hose connector **100** do not require undue assembly or disassembly which is generally required in conventional hose connector **100'** to check and/or correct any loosening or unchecked movement of the hose **108**.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100'**: Conventional Hose Connector
- **100**: Hose Connector
- **102**: Body
- **104**: End
- **106**: First Body Portion
- **108**: Hose
- **110**: Outer Surface
- **112**: Second Body Portion
- **114**: Gap
- **116**: External Threads
- **124**: Clamping Element
- **126'**: Straight Clamping Claws
- **126**: Clamping Claws
- **128**: Teeth
- **132**: Opening
- **140**: Clamping Nut
- **142**: Internal Threads
- **143**: Tail Portion
- **144**: Clamping Surface
- **A1**: Longitudinal axis
- **A2**: Threading Direction
- **α**: Angle of orientation of clamping claws relative to longitudinal axis
- **D1**: Radial Movement
- **D2**: Perpendicular Movement
- **D3**: Axial Movement
- **F**: Force

## Claims

1. A hose connector **(100)** comprising:
a body **(102)** including:
a first body portion **(106)** extending along a longitudinal axis **(A1);** and
a second body portion **(112)** disposed concentrically around the first body portion **(106);**
wherein the first body portion **(106)** and the second body portion **(112)** define a gap **(114)** therebetween such that the gap **(114)** is adapted to receive a hose **(108)** therein;
a clamping nut **(140)** threadably coupled to the second body portion **(112);** and
a plurality of clamping claws **(126)** associated with the second body portion **(112)**being oriented at an angle **(α)** greater that 0 degree relative to the longitudinal axis **(A1),**
**characterized in that:**
the plurality of clamping claws (**126**) are designed such that they remain straight along the longitudinal axis (**A1**) up to a point before the clamping claws (**126**) take a helical arrangement in accordance with the angle **(α)**.

2. The hose connector **(100)** of claim 1, wherein the angle **(α)** lies in a range of 10 degrees to 60 degrees.

3. The hose connector **(100)** of any one of the preceding claims, wherein the plurality of clamping claws **(126)** is formed integrally with the second body portion **(112)**.

4. The hose connector **(100)** of any one of the preceding claims, wherein the plurality of clamping claws **(126)** is adapted to move radially **(D1)** relative to the first body portion **(106).**

5. The hose connector **(100)** of any one of the preceding claims, wherein the plurality of clamping claws **(126)** is adapted to move axially **(D3)** relative to the first body portion **(106).**

## Patentansprüche

1. Schlauchanschluss (100), umfassend:
ein Gehäuse (102) mit:
einem ersten Gehäuseteil (106), das sich entlang einer Längsachse (A1) erstreckt; und
einem zweiten Gehäuseteil (112), das konzentrisch um das erste Gehäuseteil (106) angeordnet ist;
wobei das erste Gehäuseteil (106) und das zweite Gehäuseteil (112) einen Spalt (114) derart zwischen sich ausbilden, dass der Spalt (114) dazu geeignet ist, einen Schlauch (108) in sich aufzunehmen;
einer Spannmutter (140), die schraubbar mit dem zweiten Gehäuseteil (112) verbunden ist; und
einer Vielzahl von Spannklauen (126), die mit dem zweiten Gehäuseteil (112) verbunden sind, die in einem Winkel (α) größer als 0 Grad relativ zur Längsachse (A1) ausgerichtet sind,
**dadurch gekennzeichnet, dass**:
die Vielzahl von Spannklauen (126) so ausgebildet sind, dass sie entlang der Längsachse (A1) bis zu einem Punkt gerade verbleiben, bevor die Spannklauen (126) eine schraubenförmige Anordnung entsprechend dem Winkel (α) aufweisen.

2. Schlauchanschluss (100) gemäß Anspruch 1, wobei der Winkel (α) im Bereich von 10 bis 60 Grad liegt.

3. Schlauchanschluss (100) gemäß einem der vorhergehenden Ansprüche, wobei die Vielzahl von Spannklauen (126) integral mit dem zweiten Gehäuseteil (112) ausgebildet sind.

4. Schlauchanschluss (100) gemäß einem der vorhergehenden Ansprüche, wobei die Vielzahl von Spannklauen (126) dazu ausgebildet ist, sich radial (D1) in Bezug zu dem ersten Gehäuseteil (106) zu bewegen.

5. Schlauchanschluss (100) gemäß einem der vorhergehenden Ansprüche, wobei die Vielzahl von Spannklauen (126) dazu ausgebildet ist, sich axial (D3) in Bezug zu dem ersten Gehäuseteil (106) zu bewegen.

## Revendications

1. Raccord de tuyau (100) comprenant :
un corps (102) incluant :
une première portion de corps (106) s'étendant le long d'un axe longitudinal (A1) ; et une seconde portion de corps (112) disposée concentriquement autour de la première portion de corps (106) ;
dans lequel la première portion de corps (106) et la seconde portion de corps (112) définissent un espace (114) entre elles de telle sorte que l'espace (114) est apte à recevoir un tuyau (108) à l'intérieur ;
un écrou de serrage (140) couplé par filetage à la seconde portion de corps (112) ; et une pluralité de griffes de serrage (126) associées à la seconde portion de corps (112) étant orientées selon un angle (α) supérieur à 0 degrés par rapport à l'axe longitudinal (A1),
**caractérisé en ce que** :
la pluralité de griffes de serrage (126) est conçue de telle sorte qu'elles restent droites le long de l'axe longitudinal (A1) jusqu'à un point avant que les griffes de serrage (126) prennent une disposition hélicoïdale selon l'angle (α).

2. Raccord de tuyau (100) de la revendication 1, dans lequel l'angle (α) se situe dans une plage de 10 degrés à 60 degrés.

3. Raccord de tuyau (100) de l'une quelconque des revendications précédentes, dans lequel la pluralité de griffes de serrage (126) est formée d'un seul tenant avec la seconde portion de corps (112).

4. Raccord de tuyau (100) de l'une quelconque des revendications précédentes, dans lequel la pluralité de griffes de serrage (126) est apte à se déplacer radialement (D1) par rapport à la première portion de corps (106).

5. Raccord de tuyau (100) de l'une quelconque des revendications précédentes, dans lequel la pluralité de griffes de serrage (126) est apte à se déplacer axialement (D3) par rapport à la première portion de corps (106).
